(19) Europäisches Patentamt
European Patent Office
Office européen des brevets

(11) **EP 1 613 980 B1**

(12) **EUROPÄISCHE PATENTSCHRIFT**

(45) Veröffentlichungstag und Bekanntmachung des Hinweises auf die Patenterteilung:
**23.01.2008 Patentblatt 2008/04**

(21) Anmeldenummer: **04725596.3**

(22) Anmeldetag: **03.04.2004**

(51) Int Cl.:
**G01S 17/95** (2006.01)

(86) Internationale Anmeldenummer:
**PCT/DE2004/000694**

(87) Internationale Veröffentlichungsnummer:
**WO 2004/092767 (28.10.2004 Gazette 2004/44)**

(54) **VERFAHREN ZUR ERFASSUNG VON WINDGESCHWINDIGKEITEN MIT EINEM DOPPLER-LIDAR-SYSTEM, INSBESONDERE AN BORD VON FLUGZEUGEN, UND DOPPLER-LIDAR-SYSTEM**

METHOD FOR DETECTING WIND SPEEDS USING A DOPPLER-LIDAR SYSTEM, ESPECIALLY ON AEROPLANES, AND DOPPLER-LIDAR SYSTEM

PROCEDE POUR DETECTER DES VITESSES DE VENT AU MOYEN D'UN SYSTEME DOPPLER-LIDAR, NOTAMMENT A BORD D'AVIONS, ET SYSTEME DOPPLER-LIDAR

(84) Benannte Vertragsstaaten:
**AT BE BG CH CY CZ DE DK EE ES FI FR GB GR HU IE IT LI LU MC NL PL PT RO SE SI SK TR**

(30) Priorität: **10.04.2003 DE 10316762**

(43) Veröffentlichungstag der Anmeldung:
**11.01.2006 Patentblatt 2006/02**

(73) Patentinhaber: **EADS Deutschland GmbH
85521 Ottobrunn (DE)**

(72) Erfinder:
• **HALLDORSSON, Thorsteinn
  85586 Poing (DE)**
• **HOFMANN, Michael
  81927 München (DE)**
• **SOBOTTA, Gerald
  82054 Sauerlach (DE)**

(56) Entgegenhaltungen:
DE-A- 4 013 702        US-A- 4 195 931
US-A- 5 214 484

**Beschreibung**

Die vorliegende Erfindung betrifft ein Verfahren zur Erfassung von Windgeschwindigkeiten mit einem Doppler-Lidar-System gemäß dem Patentanspruch 1 und ein Doppler-Lidar-System zur Erfassung von Windgeschwindigkeiten, insbesondere an Bord von Flugzeugen, gemäß dem Patentanspruch 13.

Die Erfassung von Windgeschwindigkeiten und Turbulenzen in der Atmosphäre ist insbesondere für den Flugverkehr von erheblicher Bedeutung. So können z.B. auf ein Flugzeug schädliche Böen einwirken, welche zu hohen dynamischen Belastungen der Flugzeugstruktur führen. In vielen Fällen kommt es sogar zu kritischen Flugzuständen aufgrund von besonders starken Luftturbulenzen in der Atmosphäre, die in einigen extremen Situationen in der Vergangenheit sogar zu Unfällen geführt haben. Darüber hinaus wirken sich Scherwinde und Luftturbulenzen negativ auf den Flugkomfort aus und führen zu einem erhöhten Treibstoffverbrauch.

Deshalb wird in der Luftfahrttechnik versucht, Scherwinde und Luftturbulenzen zu vermessen und anschließend mit entsprechenden Ruderausschlägen zu kompensieren, d.h. aktiv auszuregeln. Jedoch ist eine direkte Messung der Luftbewegung am Flugzeugrumpf oder an den Tragflächen mit mechanischen Sonden, wie beispielsweise Beschleunigungsaufnehmern oder Drucksensoren, nicht geeignet, da keine ausreichende Zeit zur Betätigung der Flügelaktorik verbleibt. Es ist daher notwendig, die Luftbewegung mit Sensoren vor dem Flugzeug auf seiner Flugstrecke im Vorfeld zu messen, also einige Sekundenbruchteile, bevor sie durchflogen wird.

Zur aktiven Ausregelung der Turbulenzen und Scherwinde ist z.B. bei Verkehrsflugzeugen eine Mindestentfernung von etwa 50 - 200 m vor dem Flugzeug erforderlich. Zusätzlich ist eine Auflösung der Geschwindigkeit der Luftteilchen in der Größenordnung von 1 m/Sek. und ihres Ortes vor dem Flugzeug mit einer Auflösung im Bereich der Flügelausdehnung von etwa 5 - 10 m Tiefe notwendig. Für derartige Fernmessverfahren kommen beispielsweise Wetter-Radar, Laser-Anemometer und Lidar in Frage.

Bei Wetter-Radar-Systemen besteht das Problem, dass sie für ihre Rückstreumessung große Schwebeteilchen hoher Dichte, wie beispielsweise Wassertropfen in Wolken, benötigen und deshalb nur zur Frühwarnung von Wetterwolken in größerer Entfernung bis zu einigen 10 Kilometern geeignet sind. Die häufigsten Luftstörungen bei klarer Sicht, wie beispielsweise Scherwinde und sogenannte "clear air turbulances" in der Troposphäre und Jetstreams in der Stratosphäre können dagegen vom Wetter-Radar nicht erfasst werden, da die Wellenlänge von einigen Zentimetern (X-Band) im Vergleich zur Größe der Luftteilchen relativ lang ist.

Deshalb wurde versucht, Laser-Doppler-Anemometer zu verwenden, die in der Strömungsmechanik zur Diagnose von Luftströmungen eingesetzt werden. Sie benötigen jedoch eine scharfe Fokussierung des Laser-Messstrahls, um ausreichend starke Rückstreusignale von einzelnen Aerosolen zu erzeugen und können daher nur für Messungen im Nahbereich bis höchstens einige Meter Entfernung verwendet werden. Ein derartiges System und Verfahren ist z.B. in der Druckschrift DE 40 13 702 C und in S. Damp, "Battery-driven Miniature LDA-System with Semiconductor Laser Diode", in Application of Laser Anemometry to Fluid Mechanics, 4th International Symposium, Lissabon, Portugal, 1989, beschrieben.

Um Bewegungen kleinster Luftteilchen eines ausgedehnten Volumens in größerer Entfernung zu messen, wurde deshalb versucht, sogenannte Doppler-Lidar-Verfahren, die in kohärente und inkohärente Lidars unterteilt werden, einzusetzen. Beim Aerosol-Lidar-Verfahren können jedoch nur Schwebeteilchen bzw. Aerosole bei einer entsprechend geringen Frequenzvsrbreitsrung des Doppler-Rückstreusignals detektiert, werden.

In dem Artikel "Tracking weathers flight path", in IEEE Spectrum, Sept. 2000, Seiten 38 - 45, wird ein Aerosol-Lidar-System zur groben Anzeige von Wind- oder Turbulenzzonen beschrieben. Derartige Aerosol-Lidarsysteme mit Lasern im Infrarot-Wellenlängenbereich von 2 $\mu$m oder 10 $\mu$m bringen den Vorteil, dass Messungen an kleineren Aerosolen möglich sind. Auf Grund ihrer langen Pulslänge und niedriger Pulsfrequenz sind sie jedoch nur für große Reichweiten im Bereich von 5 - 20 km und für große Messvolumen mit Kantenlängen von 50 - 500 m verwendbar. Deshalb ist mit derartigen Systemen keine Ausregelung durch Ruderausschläge möglich, sondern nur ein rechtzeitiges Umfliegen großräumiger Turbulenzzonen.

Deshalb wurde versucht, Aerosol-Lidar-Systeme mit kürzeren Wellenlängen und höherer Pulsfrequenz zu entwickeln, wie z.B. in "Aerosol and cloud backscatter at 1.064, 1.54, and 0.53 $\mu$m by airborne hard target calibrated Nd: YAG/methane Raman lidar", Appl. Opt. Vol 36, pp. 3475 - 3490 (1997) beschrieben. Dabei besteht jedoch das weitere Problem, dass die Dichte der Aerosole in vielen Regionen der Erde und insbesondere in Luftstraßen in großen Höhen über den Ozeanen zu niedrig ist, um zuverlässige Messungen zur Ausregelung von Luftturbulenzen durchzuführen.

Aus diesem Grunde wurde versucht, zusätzlich zu der Aerosolstreuung auch die Doppler-verschobene Rückstreuung an Luftmolekülen zu verwenden, um ausreichend hohe Messsicherheit für Flugregelungen in allen Flughöhen und bei allen Wetterbedingungen zu erreichen. In dem Artikel von D. Rees und I.S. McDermid, "Doppler lidar atmospheric wind sensor: reevaluation of a 355-nm incoherent Doppler lidar", Appl. Opt. Vol. 29, No. 28, pp 4133 - 4144 (1990), wird die Messung der molekularen Doppler-Verschiebung in Doppler-Lidar-Systemen mittels Fizeau- bzw. Fabry-Perot-Interferometern mit inkohärentem Empfang beschrieben. Bei der spektralen Messung werden die empfangenen Photonen über ein Interferenzmuster mit einem abbildenden, ortsauflösenden Detektor auf mehrere Empfangskanäle verteilt, und zwar im Fabry-Perot-Interferometer auf konzentrische Interferenzringe und beim Fizeau-Interferometer auf Interferenzstreifen. Dabei besteht jedoch das Problem, dass die Erkennung von schwachen Signalen gegenüber dem Rauschen mehrerer einzelner Empfangskanäle erschwert ist.

Bei Doppler-Lidarmessungen besteht deshalb das generelle Problem der geringen Intensität der Rückstreuung sowohl von Molekülen als auch von Aerosolen. Um die Laserleistung, die für zuverlässige Messungen notwendig ist, trotzdem gering zu halten, muss ein möglichst empfindlicher Photodetektor verwendet werden und gleichzeitig der Einfluss von Rauschen durch Hintergrundstrahlung der Atmosphäre und durch elektronisches Rauschen im Detektor und Verstärker entsprechend effizient unterdrückt werden.

In dem Artikel von C. Nardell et al.,"GroundWinds New Hampshire and the LIDARFest 2000 Campaign", SPI Internat. Symp. on Opt. Science and Technology, San Diego 2001, SPIE 4484-05 wird ein Doppler-Lidar mit Direktempfang und UV-Lasern beschrieben, das zur Messung von Winden vom Erdboden aus in verschiedenen Höhen geeignet ist. Dabei wird die Luftbewegung von einer Bodenstation mit Hilfe von Lasern im UV-Bereich mit einer Ausgangsleistung von mehreren Watt und Empfangsteleskopen mit einem Durchmesser von einigen zehn Zentimern bis zu einigen Kilometern Höhe in der Atmosphäre gemessen. Eine Integration der schwachen Rückstreusignale über mehrere Sekunden ist hierbei möglich, da die Winde über längere Zeiten stabil sind. Derartige Systeme und Verfahren sind jedoch zur Messung von Luftbewegungen von einem Flugzeug aus nicht geeignet, da für diesen Zweck wesentlich kompaktere Systeme mit Lasern geringerer Leistung und kleineren Empfangsoptiken notwendig sind. Weiterhin muss die Signalauswertung in nur einigen zehn Millisekunden erfolgen.

In dem Artikel von P.B. Hays und J. Wang "Image plane detector for Fabry-Perot interferometers: physical model and improvement with anticoincidence detection", Appl. Opt. Vol. 30, No. 22, pp 3100-3107 (1991) wird ein Verfahren zur Registrierung der Bewegung von Interferenzringen eines Fabry-Perot-Interferometers mit einem speziell dafür ausgelegten Detektor gezeigt. Dabei ist die Geometrie des Detektors dem Intensitätsverlauf im Interferenzmuster angepasst. Es wird ein Photomultiplier mit einer konventionellen Photokathode, jedoch mit spezieller Anodenstruktur, verwendet, wobei konzentrische Anodenringe unterschiedlicher Breite analog dem radialen Intensitätsverlauf im Interferogramm verwendet werden. Wird das konzentrische, ringförmige Interferogramm auf die Photokathode des Photomultipliers abgebildet, werden die Photoelektronen verstärkt und gelangen auf die konzentrisch angeordneten Photoanodenringe. Auf den Anodenringen entsteht dann ein abgestufter Ladungsabdruck des Interferenzmusters. Aus der Verschiebung der Ladungsstufen auf den Anodenringen kann die Lage des Interferenzringes des Fabry-Perot-Interferometers dann näherungsweise bestimmt werden. Dieses Verfahren hat jedoch den Nachteil, dass nur eine grobe Abtastung des Interferogramms möglich ist. Weiterhin entstehen Messfehler, wenn das Interferogramm nicht konzentrisch zu den Anodenringen abgebildet wird.

Um diese Nachteile zu überwinden, beschreiben J. Wu et al. in "Performance of a circle-to-line optical system for a Fabry-Perot-Interferometer: a laboratory study", Appl. Opt. Vol. 33 pp. 7823 - 7828 (1994) einen Empfänger, bei dem mittels einer verspiegelten Innenfläche eines Konus ein Viertel des kreisförmigen Interferogramms des Fabry-Perot-Interferometers in Zeilenstrukturen umgeformt wird und auf einen linearen Detektor oder ein CCD-Array abgebildet wird. Dieses Verfahren hat jedoch den Nachteil, dass nur ein Viertel von dem Interferogramm genutzt wird und optische Verzerrungen bei der Abbildung entstehen, die zu zusätzlichen Messfehlern führen.

In C.L. Korb et al., "Edge technique Doppler lidar wind measurements with high vertical resolution", Appl. Opt. Vol. 36, 5976 - 5983 (1997) wird ein Verfahren zur Bestimmung der Dopplerverschiebung in Molekül-Lidars durch Flankendetektion beschrieben. Dabei wird mit einem schmalbandigen spektralen Filter wie dem Fabry-Perot-Interferometer der spektrale Durchlassbereich des Filters gegenüber der Doppler-verbreiterten Linie der Rückstreuung des Lasers aus der Atmosphäre so eingestellt, dass nur ein Teil des Spektrums an seiner Intensitätsflanke durchgelassen wird. Geringste spektrale Verschiebungen der Linie werden dann als Intensitätsänderung entlang der Flanke mit einem einkanaligen Detektor registriert, die dann ein Maß der Doppler-Verschiebung des gesamten Spektrums darstellen.

Bei diesem Verfahren der Flankendetektion in Molekulardoppler-Lidars besteht ebenso wie bei der sogenannten "Fringe-Detektion" der Nachteil, dass nur ein Teil des empfangenen Lichts genutzt wird und weiterhin nur ein geringer Teil der verfügbaren spektralen Information im Empfangslicht zur Ermittlung der Doppler-Verschiebung zum Tragen kommt. Darüber hinaus entstehen hohe Kosten, da spezielle und sehr teure Photoempfänger eingesetzt werden müssen.

In Todd D. Irgang et al., "Two-channel direct-detection Doppler lidar employing a charge-coupled device as a detector", Appl. Optics, Vol. 41, No. 6, S. 1145 - 1155 (2002) wird ein Doppler-Lidar-System beschrieben, das einen CCD-Detektor umfasst. Durch Verwendung einer Konvertierungseinrichtung, die kreisförmige Interferenzmuster eines Fabry-Perot-Etalons in streifenförmige Muster umwandelt, kann diese lineare Vorrichtung verwendet werden. Dadurch sollen durch Rückstreuung an Aerosolen und Molekülen Winde gemessen werden. Die kreisförmigen Ringe, die vom Fabry-Perot-Etalon ausgegeben werden, werden mittels eines reflektierenden Konus in eine lineare Streifenserie umgewandelt.

Jedoch hat auch dieses System und Verfahren den Nachteil, dass aufgrund des Konverters optische Fehler entstehen und ein großer Aufwand notwendig ist.

Es ist die Aufgabe der vorliegenden Erfindung, ein Verfahren zur Messung von Windgeschwindigkeiten mit einem Doppler-Lidar-System anzugeben, das für eine nachfolgende Flugregelung zur Ausregelung von Turbulenzen oder Scherwinden im Bereich der Luftfahrt geeignet ist und eine hohe Messsicherheit gewährleistet. Weiterhin soll ein Doppler-Lidar-System angegeben werden, mit dem Scherwinde und Turbulenzen mit hoher Genauigkeit detektiert werden können, so dass eine Ausregelung von Turbulenzen oder Scherwinden im Flugzeug möglich ist.

Diese Aufgabe wird gelöst durch das Verfahren zur Erfassung von Windgeschwindigkeiten gemäß Patentanspruch 1 und durch das Doppler-Lidar-System zur Erfassung von Windgeschwindigkeiten, insbesondere an Bord von Flugzeugen gemäß Patentanspruch 13. Weitere vorteilhafte Merkmale, Aspekte und Details der Erfindung ergeben sich aus den abhängigen Ansprüchen, der Beschreibung und den Zeichnungen.

Bei dem erfindungsgemäßen Verfahren zur Erfassung von Windgeschwindigkeiten mit einem Doppler-Lidar-System wird ein Laserstrahl vorgegebener Frequenz zu einem Raumbereich hin ausgesandt und das aus dem Raumbereich zurückgestreute Licht empfangen, wobei zur Bestimmung einer Doppler-Verschiebung mit einem Interferometer ein Interferogramm erzeugt und mit einem Photodetektor die Intensitätsverteilung des Interferogramms gemessen wird, und wobei die Intensitätsverteilung des Interferogramms mit ein oder mehreren Referenzmustern verglichen wird, die zuvor für definierte Parameter bestimmt wurden, und aus dem Vergleich die Doppler-Verschiebung als Maß für die Windgeschwindigkeit ermittelt wird.

Das erfindungsgemäße Verfahren gewährleistet eine ausreichend hohe Messsicherheit für Flugregelung in allen Flughöhen und bei allen Wetterbedingungen, da zusätzlich zur Rückstreuung des Lichts an Aerosolen auch die Doppler-verschobene Rückstreuung an Luftmolekülen mit hoher Genauigkeit ermittelt und zur Windmessung verwendet wird. Da die Dichte der Luftmoleküle nur um höchstens einen Faktor 5 in den typischen Flughöhen bis zu 40.000 Fuß variiert, sind die Referenzmuster bzw. erwarteten Messsignale sehr zuverlässig und lassen sich stabil für jede Flughöhe in allen Regionen der Erde ermitteln. Durch die Erfindung wird das Empfangs- und Auswerteverfahren bei Doppler-Messungen so verbessert, dass bei verringerter Sendeleistung des Lasers eine ausreichend hohe Messsicherheit für die Flugregelung bei unterschiedlichsten atmosphärischen Bedingungen möglich ist. Somit können Scherwinde und Böen mit einem kompakten System bei Messentfernungen von beispielsweise 50 - 200 m aus dem Flugzeug unter Verwendung des direkten, inkohärenten Empfangs ermittelt werden, um eine Ausregelung durch Flugzeugsteuerung zu ermöglichen.

Durch die Erfindung werden die oben beschriebenen Nachteile des Standes der Technik beseitigt, da das Licht, das durch das Interferometer hindurchgelassen wird, vollständig genutzt werden kann und zusätzlich die gesamte Information, die in der geometrischen Verteilung der Lichtintensität in der Abbildungsebene des Interferometers enthalten ist, zur Registrierung der Doppler-Verschiebung verwendet werden kann. Dabei wird das verwendete Verfahren insbesondere so ausgelegt, dass es gegenüber Signalrauschen und optischen Aberationen und Störungen im Interferometer möglichst unempfindlich ist. Weiterhin sind die verwendeten Teile des ausgewählten Photoempfängers konventionell erhältlich.

Um die Rückstreuung des Laserlichts in dem Gemisch von Molekülen und Aerosolen und zusätzlich auch an kondensierten Wassertröpfchen in Wolken zu ermöglichen, wird vorzugsweise kurzwelliges Laserlicht, insbesondere im UV-Bereich, verwendet. Somit können alle Zustände der Atmosphäre erfasst werden.

Dabei wird berücksichtigt, dass die Zunahme der Intensität der Rückstreusignale an Luftmolekülen proportional zu $\lambda^{-4}$ erfolgt, wobei $\lambda$ die Wellenlänge des Laserstrahls bezeichnet. Es werden deshalb möglichst kurze Laserwellenlängen verwendet, die vorzugsweise im UV-Bereich liegen. Es ergeben sich dadurch noch die weiteren Vorteile, dass auch eine kurze Pulsdauer, beispielsweise <10 ns, und eine hohe Pulswiederholfrequenz, beispielsweise > 100 Hz, mit marktgängigen Lasern, wie z.B. Frequenz-verdreifachten oder -vervierfachten Nd: YAG-Lasern bei 0,355 $\mu$m bzw. 0,266 $\mu$m erreicht werden kann, so dass eine ausreichend hohe Ortsauflösung erzielt wird. Eine ausreichende atmosphärische Transmission ist bis zu einer unteren Grenze im UV von etwa 0,230 $\mu$m für Fernmessungen bis zu einigen Hundert Metern bei allen Flughöhen vorhanden.

Durch die Erfindung wird insbesondere auch das Problem der spektralen Verbreiterung der Laserrückstreuung an Molekülen auf Grund von Stößen und thermischer Bewegung der Moleküle gelöst. Diese Verbreiterung kann beispielsweise um einen Faktor von 10 -100 größer sein als die geringste Doppler-Frequenzverschiebung an Luftturbulenzen, die erfasst werden sollen. Diese Verbreiterung des Empfangssignals auf einen größeren spektralen Bereich hat bisher die Detektion der Doppler-Verschiebung in dem spektral gleichverteilten Rauschen so erschwert, dass ausreichend genaue Messungen nicht möglich waren. Durch die Erfindung kann die Doppler-Verschiebung trotz der spektralen Verbreiterung genau ermittelt werden.

Insbesondere wird bei der Erfindung der optische Strahlengang des Lidars so ausgelegt, dass das gesamte Interferenzmuster bzw. Interferogramm direkt, also ohne Umformung, Skalierung oder Ortseinstellung auf ein zweidimensionales Detektor-Array, abgebildet wird. Gleichzeitig werden bei der Signalauswertung z.B. alle Vorkenntnisse über die zu erwartende örtliche Verteilung der optischen Empfangssignale auf der Detektorfläche zur Ermittlung der Doppler-Verschiebung verwendet.

Die Erfindung basiert auf der Erkenntnis, dass die Gestalt und Verbreiterung des molekularen Rückstreuspektrums bei einer schmalbandigen Laserfrequenz, die monomodig ist, eine wohldefinierte spektrale Linie darstellt, deren Intensitätsverlauf in Abhängigkeit von der atmosphärischen Dichte und Temperatur, d.h. der Messhöhe des Flugzeugs über dem Meeresspiegel, vorausberechenbar ist. Insbesondere können mit der zusätzlichen Kenntnis der Transferfunktion des Interferometers, die auch mit hinreichender Genauigkeit berechenbar bzw. messbar ist, die Erwartungsprofile der Intensitätsverteilung in der Photodetektorebene des Interferometers für jede Dichte und Lufttemperatur bestimmt werden und als Verlaufswerte in einer beispielsweise zweidimensionalen "look-up-table" abgespeichert werden. Durch den Vergleich dieser modellierten spektralen Profile mit den tatsächlich gemessenen Spektren und den dabei festgestellten Abweichungen, kann die Doppler-Linienverschiebung in Abhängigkeit der Luftgeschwindigkeit für jede Flughöhe in Echtzeit bestimmt werden.

Vorteilhafterweise wird bei dem erfindungsgemäßen Verfahren das ringförmige Interferogramm eines Fabry-Perot-Interferometers direkt auf den 2-dimensionalen Photodetektor abgebildet. Dadurch ergibt sich eine Abbildung auf dem flächenhaften Photoempfänger ohne optische Umwandlung und ohne Abschattung. Somit kann beispielsweise das gestreute, Doppler-verschobene Lasersignal eines Flugzeugs aus der Atmosphäre in dem Doppler-Lidar-System mit dem Fabry-Perot-Interferometer vollständig genutzt werden, so dass kein Informationsverlust durch die optische Umwandlung erfolgt.

Bevorzugt enthalten die Referenzmuster als Parameter unterschiedliche Dichten und/oder Temperaturen der Atmosphäre. Dadurch sind für unterschiedliche atmosphärische Bedingungen, die z.B. in verschiedenen Höhen herrschen, Referenzmuster vorhanden, aus denen dasjenige Referenzmuster ausgewählt wird, das die geringst Abweichung zum aufgenommenen Interferogramm hat. Zur Parameterberechnung kann die vollständige theoretisch zu erwartende Intensitätsverteilung genutzt werden, die vorher aus einer Modellrechnung gewonnen wird. Dabei schließt die Modellrechnung die Modellierung des Lasersendestrahls, die Modellierung der Molekülgeschwindigkeitsverteilung und die Modellierung der Interferometertransferfunktion ein. Aus dem mit einer intensivierten CCD-Kamera aufgenommenen Interferogramm, das beispielsweise in Form von 2-dimensionalen Grauwertbildern vorliegt, kann dann durch Vergleich mit der Schar von Referenzmustern sowohl eine Bestimmung der Luftgeschwindigkeit in dem zu messenden Raumbereich als auch eine Bestimmung verschiedener atmosphärischer Parameter, wie beispielsweise die Messvolumentemperatur oder der Druck des Messvolumens, durchgeführt werden.

Das mindestens eine Referenzmuster enthält somit beispielsweise die Geschwindigkeit der Atmosphäre relativ zum Doppler-Lidar-System als Parameter.

Vorteilhafterweise wird aus mehreren aufeinanderfolgenden Messungen die Variation der Geschwindigkeit der Atmosphäre relativ zum Doppler-Lidar-System ermittelt. Aus den im Vergleich zur Fluggeschwindigkeit schnellen Variationen, die durch Turbulenzen oder Scherwinde verursacht werden, lässt sich dann die Luftgeschwindigkeit in dem vor dem Flugzeug liegenden Raumbereich ermitteln.

Bevorzugt ist der Laserstrahl gepulst und jeweils ein Teil eines Laserpulses wird zur Festlegung eines zeitlichen Referenzpunktes verwendet. Mittels der Laufzeit des restlichen Teils des Laserpulses kann die Entfernung des rückstreuenden Raumbereichs festgelegt werden.

Vorzugsweise wird ein Teil des Laserstrahls direkt, d.h. ohne Rückstreuung in der Atmosphäre, empfangen und registriert, wobei aus der Intensitätsverteilung eine Transferfunktion der optischen Komponenten des Systems bestimmt oder auch eine Kalibrierung durchgeführt werden kann.

Bevorzugt wird aus dem Referenzmuster mit der geringsten Abweichung zum gemessenen Interferogramm die Dichte und/oder die Temperatur des Raumbereichs ermittelt.

Vorteilhafterweise wird das erfindungsgemäße Verfahren an Bord eines bewegten Systems, beispielsweise an Bord eines Flugzeugs, Hubschraubers oder eines anderen Luftfahrzeugs durchgeführt, ebenso wie es auch an Bord eines Schiffes oder am Boden eingesetzt werden kann.

Weiterhin kann die erwartete Intensitätsverteilung des Referenzmusters auch aus gemessenen atmosphärischen Parametern und/oder Flugparametern eines Luftfahrzeugs berechnet werden, oder das gespeicherte Referenzmuster mit der geringsten Abweichung zum registrierten Interferogramm kann durch gemessene Parameter weiter angepasst werden.

Vorteilhafterweise wird der Laserstrahl in verschiedene Richtungen gesandt, um den Windgeschwindigkeitsvektor, also Betrag und Richtung der Windgeschwindigkeit in dem zu messenden Raumbereich, zu bestimmen.

Gemäß einem anderen Aspekt der Erfindung wird ein Doppler-Lidar-System zur Erfassung von Windgeschwindigkeiten, insbesondere an Bord von Flugzeugen, geschaffen, mit einer Sendeeinrichtung zum Aussenden eines Laserstrahls, einer Empfangseinrichtung zum Empfang des in der Atmosphäre zurückgestreuten Laserstrahls, einem Interferometer zur Erzeugung eines Interferogramms aus dem zurückgestreuten Laserstrahl, einem Photodetektor zur Bestimmung der Intensitätsverteilung des Interferogramms, und einer Auswerteeinheit zur Bestimmung der Doppler-Verschiebung als Maß für die Windgeschwindigkeit der Atmosphäre, wobei das Interferogramm direkt auf den Photodetektor abgebildet wird, und die Auswerteeinheit einen Speicher mit ein oder mehreren Referenzmustern umfasst, die für zuvor definierte atmosphärische Parameter gelten, und eine Vergleichseinheit zum Vergleichen des abgebildeten Interferogramms mit den Referenzmustern, um aus dem Vergleich die Windgeschwindigkeit zu ermitteln.

Mit dem erfindungsgemäßen Doppler-Lidar-System ist es möglich, mit hoher Genauigkeit die Windgeschwindigkeit bzw. Turbulenzen vor einem Flugzeug so zu bestimmen, dass beim Durchfliegen des zu messenden Raumbereichs eine Ausregelung durch entsprechende Klappensteuerung erfolgen kann. Dadurch trägt die Erfindung zum einen zur Flugsicherheit bei, zum anderen wird der Flugkomfort spürbar verbessert, und es erfolgt darüber hinaus eine Reduktion der Treibstoffkosten.

Vorteilhafterweise ist der Photodetektor ein 2-dimensionaler Photodetektor, der einen Bildverstärker und ein CCD- oder CMOS-Array umfasst. Dadurch ergeben sich geringe Kosten, da der Photodetektor marktüblich und konventionell erhältlich ist.

Bevorzugt ist zwischen der Sendeeinrichtung und der Empfangseinrichtung ein 'Transferpfad für einen Teil des Laserstrahls vorgesehen, um den erzeugten Laserstrahl direkt in der Empfangseinrichtung zu registrieren. Beispielsweise ist ein Glasfaserkabel vorgesehen, das den mittels eines Strahlteilers abgezweigten Laserstrahl der Sendeeinrichtung an ein Empfangsteleskop der Empfangseinrichtung koppelt. Dadurch ist es möglich, den ausgesandten Laserstrahl direkt zu registrieren und somit die Übertragungsfunktion der Empfangseinrichtung mit den darin vorhandenen Komponenten zu bestimmen. Weiterhin kann von Zeit zu Zeit eine Kalibrierung der Empfangseinrichtung durchgeführt werden.

Weiterhin kann der direkt zur Empfangseinrichtung geführte Laserstrahl als zeitliche Referenz verwendet werden, um die Laufzeit des ausgesandten und zurückgestreuten Laserstrahls zu definieren. Dadurch kann die Messentfernung, d.h. die Entfernung des Raumbereichs, in dem die Luftgeschwindigkeit ermittelt wird, festgelegt werden.

Bevorzugt ist das Interferometer ein Fabry-Perot-Interferometer. Vorzugsweise ist das Interferogramm ringförmig und umfasst konzentrische Ringe der Intensitätsverteilung.

Vorteilhafterweise erzeugt der Laser gepulste Laserstrahlen im UV-Bereich. Dadurch ist es möglich, die Rückstreuung an Luftmolekülen sehr genau zu messen und die Doppler-Verschiebung zu ermitteln.

Bevorzugt umfasst das Doppler-Lidar-System Feld-programmierbare-Gate-Arrays zur Berechnung der Referenzmuster. Dadurch kann eine schnelle Berechnung in Echtzeit erfolgen.

Vorteilhafterweise umfasst die Auswerteeinheit ein Modul zur Bestimmung der Transferfunktion der Bauteile der Empfangseinrichtung.

Bevorzugt ist das erfindungsgemäße Doppler-Lidar-System mit entsprechenden Komponenten zur Durchführung des erfindungsgemäßen Verfahrens ausgestaltet.

Vorteile und Merkmale, die im Zusammenhang mit dem erfindungsgemäßen Verfahren beschrieben werden, gelten auch für das erfindungsgemäße Doppler-Lidar-System, ebenso wie Vorteile und Merkmale, die für das Doppler-Lidar-System gelten, auch für das erfindungsgemäße Verfahren gelten.

Im Folgenden wird die Erfindung beispielhaft anhand der Zeichnungen beschrieben, in denen

**Fig. 1** eine schematische Darstellung eines Doppler-Lidar-Systems gemäß einer bevorzugten Ausführungsform der Erfindung zeigt;

**Fig. 2** schematisch eine Abbildung eines Interferogramms auf dem Photoempfänger des in Fig. 1 dargestellten Systems zeigt;

**Fig. 3** zeigt ein typisches 2-dimensionales Interferogramm bei relativ niedriger Photonenzahl; und

**Fig. 4** zeigt schematisch eine Windgeschwindigkeitsmessung mit dem erfindungsgemäßen Doppler-Lidar-System.

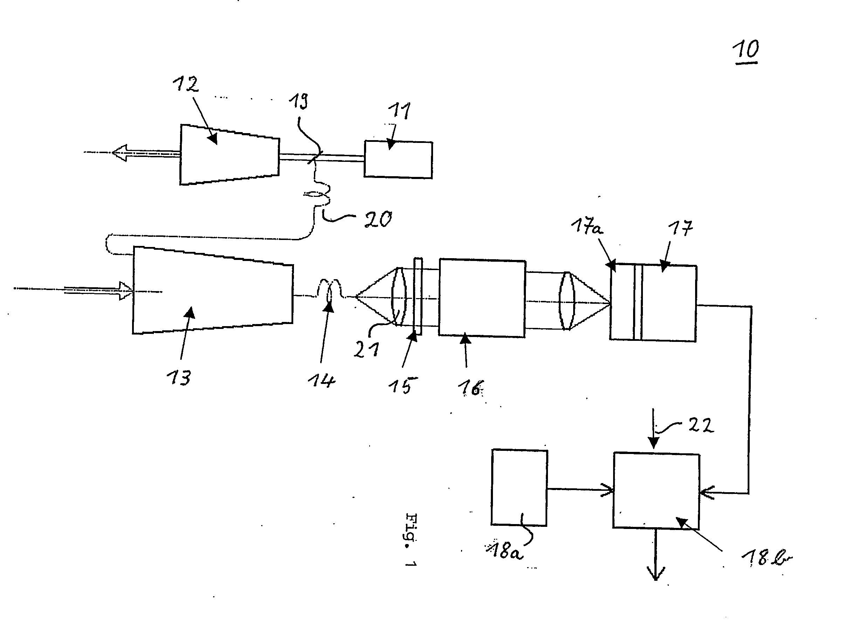

Fig. 1 zeigt ein Doppler-Lidar-System 10 als bevorzugte Ausführungsform der Erfindung. Ein Laser 11 dient zur Erzeugung eines gepulsten Laserstrahls und ist optisch an ein Sendeteleskop 12 gekoppelt, das dazu dient, einen Laserstrahl in einer vorgegebenen Richtung in die Atmosphäre zu senden. Der Laser 11 und das Sendeteleskop 12 bilden somit eine Sendeeinrichtung zum Aussenden des Laserstrahls. Zum Empfang des in der Atmosphäre zurückgestreuten Laserstrahls dient eine Empfangseinrichtung in Form eines Empfangsteleskops 13. Über eine Lichtleitfaser 14 und eine Filtereinheit 15 wird der empfangene Laserstrahl einem Interferometer 16 zugeführt, das in dieser bevorzugten Ausführungsform ein Fabry-Perot-Interferometer ist.

Ein Photodetektor 17 dient zur Bestimmung der Intensitätsverteilung eines Interferogramms, das vom Interferometer 16 aus dem zugeführten Laserstrahl erzeugt wird. Dabei ist der Photodetektor 17 in Bezug auf das Interferometer 16 so angeordnet, dass das z.B. ringförmige Interferogramm direkt auf den Photodetektor 17 abgebildet wird.

Der Ausgang des Photodetektors 17 ist elektrisch an eine Auswerteeinheit 18 gekoppelt, die einen Speicher 18a und eine Vergleichseinheit 18b in Form eines Mikroprozessors umfasst. In dem Speicher 18a sind ein oder mehrere Referenzmuster für Interferogramme gespeichert, die für definierte atmosphärische und gegebenenfalls weitere Parameter gelten. Die Vergleichseinheit 17b dient dazu, das auf dem Photoempfänger 17 abgebildete Interferogramm mit den ein oder mehreren Referenzmustern zu vergleichen und aus dem Vergleich die Windgeschwindigkeit zu ermitteln.

Zur Anpassung, Berechnung oder Veränderung der Referenzmuster können der Vergleichseinheit 18b zusätzliche Parameter als Eingangsdaten 22 zugeführt werden.

Zwischen dem Laser 11 und dem Sendeteleskop 12 ist ein Strahlteiler 19 geschaltet, der dazu dient, ein Teil des vom Laser 11 erzeugten Laserstrahls abzuzweigen und über einen Transferpfad 20 in Form einer Lichtleitfaser oder Referenzmessfaser dem Empfangsteleskop 13 zuzuführen. Dadurch gelangt im Betrieb ein kleiner Teil der vom Laser 11 abgegebenen Strahlung über den Transferpfad 20 zum Empfangsteleskop 13 und dient zur Bestimmung des Anfangszeitpunktes der Laufzeit des ausgesandten und in der Atmosphäre in definierter Entfernung zurückgestreuten Laserstrahls. Dadurch wird durch Festlegung des Zeitpunktes des Empfangs die Entfernung definiert, in der die Windgeschwindigkeit gemessen werden soll.

Weiterhin kann über den direkt von der Sendeeinrichtung zugeführten Laserstrahl die Transferfunktion des optischen Empfangssystems mit seinen verschiedenen Komponenten, wie z.B. Faser 14, Filter 15 und Interferometer 16 bestimmt werden. Dabei wird der direkt zugeführte Laserstrahl dem Interferometer 16 zugeführt und anschließend das dabei entstehende Interferogramm auf dem Photodetektor 17 abgebildet.

Das Empfangsteleskop 13 dient zur Aufnahme des aus dem Messvolumen, das ein definierter Raumbereich ist, zurückgestreuten Lichts. Über die Faser 14 in Form einer Glasfaser wird dieses Licht mittels einer optischen Linse 21 parallelisiert und zum Filter 15 weitergeleitet. Der Filter 15 dient dazu, den aus der Atmosphäre zurückgestreuten Laserstrahl aus der Hintergrundstrahlung der Sonne herauszufiltern.

Im Strahlengang schließt sich nach dem Filter 15 das Interferometer 16 an, das aus dem zugeführten Licht ein Interferogramm bildet. Das Interferometer 16 kann neben einem Fabry-Perot-Interferometer beispielsweise auch ein Fizeau-Interferometer sein.

Das vom Interferometer erzeugte Muster besteht beim Fabry-Perot-Interferometer aus konzentrischen Kreisen, wobei die Intensitätsverteilung in dem Muster und der Abstand der Kreise vom Zentrum von der Wellenlänge des zugeführten Lichts, vom Spektrum des Lasers, von der Doppler-Verschiebung, der Doppler-Verbreiterung in der Atmosphäre und der Transferfunktion der Komponenten des Empfangskanals abhängt.

Das erzeugte Interferogramm enthält die gesamten gemessenen Informationen über die Atmosphäre und wird ohne optische Umformung oder Ausblendung bzw. Zentrierung als Ganzes auf die Detektorebene des flächenhaften Photodetektors 17 mit seiner 2-dimensionalen Pixelstruktur abgebildet.

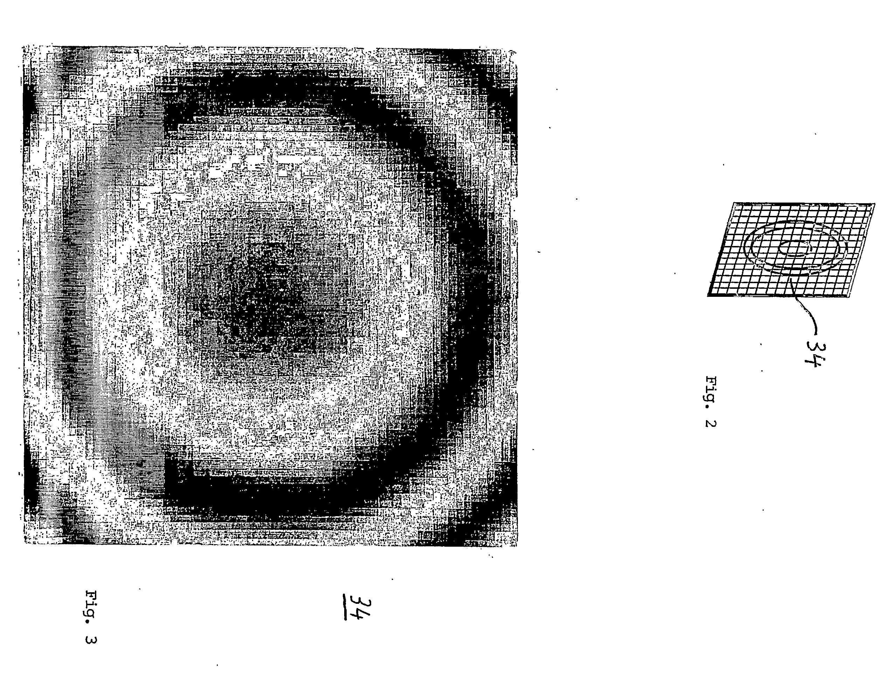

Figur 2 zeigt eine typische von dem Photoempfänger oder dem Photodetektor 17 wiedergebene Intensitätsverteilung in einem Interferogramm 34. Aufgrund der diskreten Pixelstruktur und der typischerweise schwachen optischen Empfangssignale entsteht ein stufenartiges 2-dimensionales Intensitätsbild, das der durch einen Mikroprozessor realisierten Vergleichseinheit 18b zugeführt wird.

Fig. 3 dient zur besseren Veranschaulichung des typischen 2-dimensionalen Interferogramms 34 bei einer relativ niedrigen Photonenzahl. Dort ist die Intensitätsverteilung der konzentrischen Ringe in Form von Grauwertabstufungen gezeigt. In der Vergleichseinheit 18b (siehe Fig. 1) wird dieses Intensitätsprofil oder Intensitätsmuster mit Referenzmustern verglichen, die in der Speichereinheit 18a in Form von Look-Up-Tables vorliegen. Bei der Auswertung sucht der Mikroprozessor aus den ein oder mehreren Look-Up-Tables dasjenige Intensitätsverteilungsmuster aus, das dem gemessenen am nächsten kommt. Aus diesem Vergleich ergibt sich der gesuchte Wert der Doppler-Verschiebung, die ein Parameter des gespeicherten Musters ist, und daraus abgeleitet die Geschwindigkeit der Luftteilchen im Messvolumen.

Die Referenzmuster oder die Schar von Referenzmustern können auf verschiedene Arten erzeugt werden. Beispielsweise können für verschiedene Temperaturen der Atmosphäre und verschiedene Luftgeschwindigkeiten relativ zum Messsystem unterschiedliche Referenzmuster erzeugt und in den Look-Up-Tables abgelegt werden. Weiterhin dienen der Druck und die Instrumentenfunktion als Parameter für die Bestimmung der Referenzmuster. Es ist ebenso möglich, ein oder mehrere dieser Parameter während des Messbetriebs durch Sensoren festzustellen und die gespeicherten Referenzmuster aufgrund der aktuellen Werte anzupassen. Die von den weiteren Sensoren ermittelten aktuellen Parameter können dann in Form von Eingangsdaten 22 der Vergleichseinheit 18b zugeführt werden (s. Fig. 1).

D.h., in den Interferenzmustern sind die verschiedenen Parameter, die auf ein gemessenes Interferogramm Einfluss haben, enthalten, so dass die Referenzmuster für verschiedene Höhen, Temperaturen, Geschwindigkeiten des Flugzeugs und auch unterschiedliche Instrumentenfunktionen gelten. Dabei kann die Instrumentenfunktion entweder gemessen oder berechnet sein.

Zur Vermessung der Transferfunktion des Empfangssystems wird ein Teil der Strahlung des Lasers direkt in das Empfangsteleskop 13 geleitet. Die Transferfunktion kann dann in den Zwischenzeiten zwischen der Vermessung des rückgestreuten Laserlichts der Atmosphäre ermittelt und bei der weiteren Auswertung berücksichtigt werden.

Bei der Auswertung werden im Wesentlichen die Intensitätsverteilungen der Referenzmuster mit der Intensitätsverteilung des gemessenen Interferogramms verglichen. Das Spektrum des aus der Atmosphäre zurückgestreuten Lichts enthält eine Stoßverbreiterung der Moleküle sowie eine thermische Verbreiterung, die von der jeweiligen Temperatur abhängig ist. Durch die Doppler-Verschiebung ist der Schwerpunkt des Spektrums verschoben. Wie oben erwähnt, wirkt sich auch die Instrumentenfunktion, d.h. die Transferfunktion der optischen Komponenten des Empfängers, auf das ermittelte Spektrum aus. In den Referenzmustern sind all diese Faktoren berücksichtigt.

Die Messung der Doppler-Verschiebung geschieht mit einer bestimmten Messfrequenz, die frei festgelegt werden kann. Zwischen dem Abstrahlen des Sendepulses bis zum Empfang des rückgestreuten Laserlichts aus dem Messvolumen in der Atmosphäre besteht ein Zeitintervall, in dem der Sendepuls, der direkt über den Transferpfad 20 dem Empfangsteleskop 13 zugeführt wird, vom Photodetektor 17 gemessen wird. Die Intensitätsverteilung in diesem Interferogramm ist die Faltung des Spektrums des verwendeten Lasers und der Transferfunktion aller Bauteile des Empfangssystems, wie beispielsweise Empfangsteleskop 13, Glasfaser oder Faser 14, Linse 21, Filter 15 und Interferometer 16. Diese Intensitätsverteilung wird bei der Messung zur Vervollständigung der Look-Up-Tables und/oder zur Überwachung der Einstellungen des gesamten Systems, insbesondere zur Kalibrierung, verwendet.

Bei der Messung der Windgeschwindigkeit innerhalb eines vom Messsystem beabstandeten Raumbereichs mit dem in Fig. 1 gezeigten Doppler-Lidar-System 10 wird der Laser 11 mit einer typischen Pulsdauer von 10 ns betrieben, was einer Pulslänge von 1,5 m entspricht. Die Empfangseinrichtung wird dabei so eingestellt, dass das Rückstreusignal nach einer festen Pulslaufzeit aus einer festen Entfernung, beispielsweise 100 m, empfangen wird. Als Zeitreferenz dient dabei der Zeitpunkt des Durchgangs der gepulsten Laserstrahlung durch die Apertur des Sendeteleskops 12. Dieser Zeitpunkt wird ermittelt, indem ein Teil der Strahlung über den als Glasfaser ausgestalteten Transferpfad 20 direkt dem Empfangsteleskop 13 zugeführt wird, also ohne den Weg durch die Atmosphäre.

Außer diesem Zeitpunkt bzw. Trigger, der von dem Photodetektor 17 registriert wird, kann auch die spektrale Intensitätsverteilung des direkt zugeführten Laserstrahls in der Abbildungsebene des Interferometers 16 auf dem Photodetektor 17 aufgezeichnet und abgespeichert werden. Dadurch ergibt sich die Transferfunktion $F_0$ aller optischen Komponenten als :

$$F_0 = f_{La} \emptyset\ f_{Fi} \emptyset\ f_{Fa} \emptyset\ f_{IF}, \qquad\qquad (1)$$

wobei $\emptyset$ den Faltungsoperator bezeichnet und $f_{La}$, $f_{Fi}$, $f_{Fa}$ und $f_{IF}$ die Transferfunktionen der optischen Komponenten Laser, Filter, Faser und Interferometer darstellen.

Da diese Funktion die inhärente Instrumentenfunktion ist und nur selten, d.h. nur bei Dejustage und Degradation des Systems verändert wird, braucht sie nicht bei jedem Puls des Lasers abgespeichert werden, sondern kann zur anfänglichen Selbstkalibrierung und zur Überwachung des Systems immer wieder neu gemessen werden. Wenn das Messsystem stabil genug ist, besteht auch die Möglichkeit, die Instrumentenfunktion rein rechnerisch zu ermitteln und bei weiteren Auswertungen zu berücksichtigen. Die Auswertung dieser Tests kann bei der Berechnung zur Stützung der Daten verwendet werden.

Das zum späteren Zeitpunkt von dem Messvolumen in der Atmosphäre zurückgestreute Licht des Laserpulses wird vom Empfangsteleskop 13 aufgenommen und über denselben Weg wie vorher das direkt zugeführte Laserlicht über das Empfangsteleskop 13, die Linse 21, den Filter 14, die Faser 15 und das Interferometer 16 dem Photoempfänger bzw. Photodetektor 17 zugeführt.

Das aus der Atmosphäre zurückgestreute Laserlicht ist spektral verbreitert und durch den Doppler-Effekt aus der Relativgeschwindigkeit des Flugzeugs durch die Luft und die Eigenbewegung der Luftmasse spektral verschoben. Nach dem Durchgang durch das Empfangsteleskop 13 wird es noch mit der Transferfunktion der Optik $F_0$ gefaltet und stellt dann die gesamte gemessene Funktion F dar:

$$F = F_D \emptyset\ F_0 \qquad\qquad (2)$$

Der gemessene Intensitätsverlauf wird mit dem gespeicherten 2-dimensionalen Feld von möglichen Intensitätsverläufen in Abhängigkeit der atmosphärischen Parameter Dichte und Temperatur verglichen. Der Intensitätsverlauf mit dem geringsten Unterschied zwischen Messung und Berechnung wird in einer modellbasierten Auswertung verwendet, oder er wird durch eine entsprechende Interpolation oder Parameteranpassung verbessert. Aus diesem Intensitätsverlauf kann nun die Doppler-Funktion $F_D$ durch rechnerische Entfaltung gewonnen werden. Aus der Breite und dem Verlauf der Doppler-Funktion können nun Dichte und Temperatur der Luft in entsprechenden Flughöhen zusätzlich gewonnen werden.

Andererseits besteht auch die Möglichkeit, aus den bekannten Werten Luftdichte und Lufttemperatur, die mit anderen Messinstrumenten des Flugzeugs gemessen werden, den erwarteten Verlauf der Doppler-Funktion im Voraus zu berechnen und mit der zusätzlichen Kenntnis der Instrumentenfunktion die Doppler-Verschiebung rechnerisch aus der gemessenen Verschiebung der Interferogramme 34 zu gewinnen. Aus der Doppler-Verschiebung und der Ausrichtung der Messachse aus dem Flugzeug lässt sich dann die Geschwindigkeit des Flugzeugs gegenüber der Luftmasse und die interne Bewegung der Luftmasse berechnen.

Nach der direkten Abbildung des Interferogramms als Ganzes und ohne optische Umformung oder Ausblendung auf dem flächenhaften Detektor, z.B. einem CCD-Array oder CMOS-Array, erfolgt eine Lichtverstärkung unter Verwendung einer Multi-Channel-Plate, die einen Bildverstärker 17a bildet und zwischen der Abbildungsebene des Interferometers 16 und dem flächenartigen Photodetektor 17 vorgesehen ist.

Anschließend werden die Interferogramme mit den Parameterberechnungen und/oder abgespeicherten Informationen über den erwarteten Intensitätsverlauf bei dem verwendeten Interferometer, der Lufttemperatur und Dichte mit Hilfe von parallelrechnenden Mikroprozessoren, wie z.B. Feld-Programmierbare-Gate-Arrays (FPGA), verglichen. Die Referenzwerte der Interferogrammfunktion werden für unterschiedliche Parametersätze, insbesondere Laserwellenlänge $\lambda$, Atmosphärendichte $\rho$ und Lufttemperatur T gespeichert, um den Rechenaufwand zu reduzieren. Dadurch können alle im System selbst vorhandenen Informationen, sowie die in jedem Flugzeug vorhandenen Informationen über Luftdichte, Temperatur und Eigengeschwindigkeit gegenüber der Luftmasse genutzt werden.

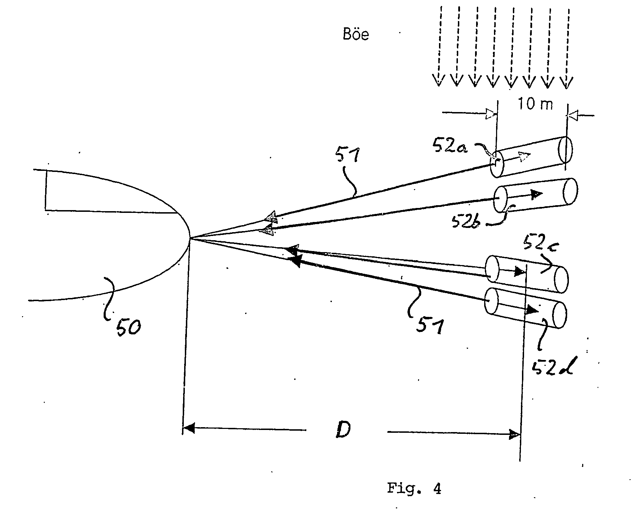

Fig. 4 zeigt schematisch eine Windgeschwindigkeitsmessung mit dem erfindungsgemäßen Doppler-Lidar-System an Bord eines Flugzeugs 50. Dabei werden verschiedene Messstrahlen 51 in unterschiedliche Richtungen gesendet, um den Luftraum vor dem Flugzeug 50 abzutasten. Die aus verschiedenen Raumbereichen 52a, 52b, 52c, 52d an Aerosolen und Molekülen zurückgestreuten Laserstrahlen werden wie oben beschrieben aufgezeichnet und analysiert, so dass die Windgeschwindigkeiten in der jeweiligen Messrichtung in dem jeweiligen Raumbereich ermittelt werden. Dabei beträgt die Entfernung D der Raumbereiche 52a - d vom Flugzeug 50 beispielsweise 100 m. Die Aufteilung des Messstrahls in die Vielzahl von Messstrahlen 51 kann z.B. mit einem vorgesetzten Scanner erfolgen, wobei gleichzeitig oder nacheinander in verschiedenen Richtungen der Luftraum vor dem Flugzeug 50 abgetastet wird. Die Raumbereiche 52a - d haben beispielsweise eine Ausdehnung in Messrichtung von ca. 10 m.

Durch Projektion in die verschiedenen Richtungen kann aus den einzelnen Messergebnissen der Windgeschwindigkeitsvektor bestimmt werden. Die Verarbeitung der in der jeweiligen Laser-Sendestrahlrichtung gemessenen Doppler-Geschwindigkeitskomponenten zu einem geschätzten Geschwindiglceitsvektor erfolgt beispielsweise durch ein überbestimmtes Gleichungssystem mit mindestens vier Einzelmessungen bei vier Messrichtungen, wobei Wichtungsfaktoren zur Reduzierung des Betrags vergangener Messungen berücksichtigt werden. Der Geschwindigkeitsberechnung von $v_n$ aus der Messfolge $m_1$, $m_2$, $m_3$, $m_4$,..., $m_k$ folgt dann die Geschwindigkeitsberechnung $V_{n+1}$ aus der Messfolge $m_2$, $m_3$, $m_4$, $m_5$,...,$m_{k+1}$.

Die Erfindung ermöglicht eine genaue Messung des Windgeschwindigkeitsvektors weit vor einem Flugzeug in Echtzeit mit Hilfe der interferometrischen Messung der Doppler-Linienverschiebung von an Luftmolekülen und Aerosolen rückgestreuten gepulsten Laserstrahlen. Aufgrund der erfindungsgemäßen Anordnung und dem erfindungsgemäßen Auswerteverfahren wird eine große Reichweite erreicht, d.h. bei der Auswertung werden nur verringerte Rückstreuintensitäten benötigt.

Die Böenvermessung in Echtzeit weit vor dem Flugzeug, beispielsweise in einer Entfernung, die 0,5 Sek. Flugzeit entspricht, erlaubt gezielte Steuerungs- und Trimmmanöver zur Reduktion schädlicher Böeneinwirkungen auf das Flugzeug. Für Systeme mit kürzerer Reichweite, beispielsweise zur Messung des Anströmgeschwindigkeitsvektors, sind noch weiter reduzierte Einbaumaß möglich.

Die Messung kann von bewegten Messplattformen, beispielsweise von Flugzeugen, Hubschraubern, Ballonen, Satelliten oder Schiffen erfolgen, oder auch von bodenfesten Messstationen aus durchgeführt werden.

Zur Einstellung der Messentfernung wird bei der Messdatenaufnahme ein Zeitfenster festgelegt, das mit der Laser-Strahlpulsung synchronisiert wird.

Die Messdatenverarbeitung kann in Echtzeit erfolgen, wobei die Referenzwerte bzw. -muster durch Verwendung von Feld-Programmierbaren-Arrays parallel berechnet werden. Daraus können die optimalen Parameter für die Wellenlänge $\lambda$ und die Temperatur T des Messvolumens bestimmt werden. Zur Reduzierung von Rechenaufwand können die Referenzmuster, die Referenzwerte der Interferogrammfunktion darstellen, für unterschiedliche Parametersätze $\lambda$ und T gespeichert werden. Neben den Speicherzugriffen werden nur Addition und Betragsbildung für positive, ganze Zahlen zur Berechnung der Referenzwerte benötigt, wodurch der Flächenbedarf der lokalen Rechnereinheiten im Feld-Programmierbaren-Gate-Array sehr klein gehalten wird.

Bei dem Vergleich des Interferogramms der aus der Atmosphäre zurückgestreuten Laserstrahlung mit der Schar von Referenzmustern wird während der Auswertung eine Bestimmung der Wellenlänge $\lambda$ und der Messvolumentemperatur T durchgeführt. Zur Parameterberechnung wird die vollständige, theoretisch zu erwartende Intensitätsverteilung genutzt, die vorher aus einer Modellrechnung gewonnen wird. Dabei schließt die Modellrechnung die Modellierung des Laserstrahls, die Modellierung der Molekülgeschwindigkeitsverteilung und die Modellierung der Interferometertransferfunktion ein.

Neben der Detektion von Böen oder Luftturbulenzen kann das erfindungsgemäße Doppler-Lidar und das erfindungsgemäße Verfahren zur Erfassung von Windgeschwindigkeiten auch für Anwendungen und Einsätze am Boden verwendet werden, beispielsweise zur Detektion von Scherwinden an Flughäfen oder zur Messung von Windprofilen in vertikaler Richtung durch die Atmosphäre.

**Patentansprüche**

1. Verfahren zur Erfassung von Windgeschwindigkeiten mit einem Doppler-Lidar-System (10), bei dem ein Laserstrahl vorgegebener Wellenlänge zu einem Raumbereich (52a, 52b, 52c, 52d) hin ausgesandt wird und das aus dem Raumbereich zurückgestreute Licht empfangen wird, wobei zur Bestimmung einer Dopplerverschiebung mit einem Interferometer (16) ein Interferogramm (34) erzeugt wird und mit einem Photodetektor (17) die Intensitätsverteilung des Interferogramms (34) gemessen wird,
   **dadurch gekennzeichnet, dass**
   die Intensitätsverteilung mit einer Schar von Referenzmustern verglichen wird, die zuvor für definierte atmosphärische Parameter bestimmt wurden, die unterschiedliche Dichten und/oder Temperaturen der Atmosphäre umfassen, wobei aus dem Vergleich mit der Schar von unterschiedlichen Referenzmustern die Dopplerverschiebung als Maß für die Windgeschwindigkeit ermittelt wird.

2. Verfahren nach Anspruch 1, **dadurch gekennzeichnet, dass** das Interferogramm (34) ringförmig ist und direkt auf den 2-dimensionalen Photodetektor (17) abgebildet wird.

3. Verfahren nach Anspruch 1, **dadurch gekennzeichnet, dass** das Interferogramm streifenförmig ist und direkt auf den 2-dimensionalen Photodetektor abgebildet wird.

4. Verfahren nach einem der vorhergehenden Ansprüche, **dadurch gekennzeichnet, dass** das Referenzmuster mit der geringsten Abweichung zum gemessenen Interferogramm (34) zur Bestimmung der Dopplerverschiebung verwendet wird.

5. Verfahren nach einem der vorhergehenden Ansprüche, **dadurch gekennzeichnet, dass** das Referenzmuster die Geschwindigkeit der Atmosphäre relativ zum Doppler-Lidar-System (10) als Parameter enthält.

6. Verfahren nach einem der vorhergehenden Ansprüche, **dadurch gekennzeichnet, dass** aus mehreren aufeinanderfolgenden Messungen die Variation der Geschwindigkeit der Atmosphäre relativ zum Doppler-Lidar-System (10) ermittelt wird.

7. Verfahren nach einem der vorhergehenden Ansprüche, **dadurch gekennzeichnet, dass** der Laserstrahl gepulst ist und jeweils ein Teil eines Laserpulses zur Festlegung eines zeitlichen Referenzpunktes verwendet wird, um mittels der Laufzeit des restlichen Teils des Laserpulses die Entfernung des rückstreuenden Raumbereichs (52a, 52b, 52c, 52d) festzulegen.

8. Verfahren nach einem der vorhergehenden Ansprüche, **dadurch gekennzeichnet, dass** ein Teil des Laserstrahls direkt und ohne Rückstreuung empfangen und registriert wird, wobei aus der Intensitätsverteilung eine Transferfunktion optischer Komponenten bestimmt und/oder ein Kalibrierung durchgeführt wird.

9. Verfahren nach einem der vorhergehenden Ansprüche, **dadurch gekennzeichnet, dass** aus dem Referenzmuster mit der geringsten Abweichung zum gemessenen Interferogramm (34) Dichte und/oder Temperatur des Raumbereichs (52a, 52b, 52c, 52d) ermittelt werden.

10. Verfahren nach einem der vorhergehenden Ansprüche, **dadurch gekennzeichnet, dass** es an Bord eines bewegten Systems, bevorzugt an Bord eines Luftfahrzeugs (50), durchgeführt wird.

11. Verfahren nach einem der vorhergehenden Ansprüche, **dadurch gekennzeichnet, dass** aus gemessenen atmosphärischen Parametern und/oder Flugparametern eines Luftfahrzeugs (50) die erwartete Intensitätsverteilung des Referenzmusters berechnet wird.

12. Verfahren nach einem der vorhergehenden Ansprüche, **dadurch gekennzeichnet, dass** der Laserstrahl in verschiedene Richtungen gesandt wird, um durch Messung der Dopplerverschiebung in diesen Richtungen den Windgeschwindigkeitsvektor zu bestimmen.

13. Doppler-Lidar-System (10) zur Erfassung von Windgeschwindigkeiten, insbesondere an Bord von Flugzeugen (50), mit
    einer Sendeeinrichtung (12) zum Aussenden eines Laserstrahls,
    einer Empfangseinrichtung (13) zum Empfang des in der Atmosphäre zurückgestreuten Laserstrahls,

einem Interferometer (16) zur Erzeugung eines Interferogramms (34) aus dem zurückgestreuten Laserstrahl,

einem Photodetektor (17) zur Bestimmung der Intensitätsverteilung des Interferogramms (34), wobei das Interferogramm (34) direkt auf den Photodetektor (17) abgebildet wird, und

einer Auswerteeinheit (18a, 18b) zur Bestimmung der Dopplerverschiebung als Maß für die Windgeschwindigkeit der Atmosphäre,

**dadurch gekennzeichnet, dass**

die Auswerteeinheit (18a, 18b) einen Speicher (18a) mit einer Schar von Referenzmustern umfasst, die für zuvor definierte atmosphärische Parameter gelten, welche unterschiedliche Dichten und/oder Temperaturen der Atmosphäre umfassen, und

eine Vergleichseinheit (18b) vorgesehen ist, die aus einem Vergleich des abgebildeten Interferogramms (34) mit der Schar von Referenzmustern die Windgeschwindigkeit ermittelt.

14. Doppler-Lidar-System nach Anspruch 13 , **dadurch gekennzeichnet, dass** der Photodetektor (17) ein 2-dimensionaler Photodetektor ist, der einen Bildverstärker (17a) und ein CCD- oder CMOS-Array umfasst.

15. Doppler-Lidar-System nach Anspruch 13 oder 14 , **dadurch gekennzeichnet, dass** zwischen der Sendeeinrichtung (12) und der Empfangseinrichtung (13) ein Transferpfad (20) für einen Teil des Laserstrahls vorgesehen ist, um den erzeugten Laserstrahl direkt in der Empfangseinrichtung (13) zu registrieren.

16. Doppler-Lidar-System nach einem der Ansprüche 13 bis 15, **dadurch gekennzeichnet, dass** das Interferometer (34) ein Fabry-Perot-Interferometer ist, das ringförmige Interferenzmuster erzeugt.

17. Doppler-Lidar-System nach einem der Ansprüche 13 bis 16, **dadurch gekennzeichnet, dass** das Interferometer (34) ein Fizeau-Interferometer ist, das streifenförmige Interferenzmuster erzeugt.

18. Doppler-Lidar-System nach einem der Ansprüche 13 bis 17, **gekennzeichnet durch** einen Laser (11), der gepulste Laserstrahlen im UV-Bereich erzeugt.

19. Doppler-Lidar-System nach einem der Ansprüche 13 bis 18, **gekennzeichnet durch** Feld-programmierbare Gate-Arrays zur Berechnung der Referenzmuster.

20. Doppler-Lidar-System nach einem der Ansprüche 13 bis 19 , **dadurch gekennzeichnet, dass** die Auswerteeinheit (18a, 18b) ein Modul zur Bestimmung der Transferfunktion von Bauteilen auf der Empfangsseite des Doppler-Lidar-Systems (10) umfasst.

**Claims**

1. Method for detection of windspeeds using a Doppler lidar system (10) in which a laser beam at a predetermined wavelength is emitted towards a spatial area (52a, 52b, 52c, 52d) and the light scattered back from the spatial area is received, with an interferogram (34) being produced by means of an interferometer (16) in order to determine any Doppler shift, and with the intensity distribution of the interferogram (34) being measured using a photodetector (17), **characterized in that** the intensity distribution is compared with a family of reference patterns which have previously been determined for defined atmospheric parameters, and comprise different densities and/or temperatures of the atmosphere, with the Doppler shift being determined as a measure of the windspeed from the comparison with the family of different reference patterns.

2. Method according to Claim 1, **characterized in that** the interferogram (34) is annular and is mapped directly onto the two-dimensional photodetector (17).

3. The method as claimed in Claim 1, **characterized in that** the interferogram is in the form of strips and is mapped directly onto the two-dimensional photodetector.

4. Method according to one of the preceding claims, **characterized in that** the reference pattern with the least discrepancy from the measured interferogram (34) is used to determine the Doppler shift.

5. Method according to one of the preceding claims, **characterized in that** the reference pattern includes the speed of the atmosphere relative to the Doppler lidar system (10), as a parameter.

6.  Method according to one of the preceding claims, **characterized in that** the variation in the speed of the atmosphere relative to the Doppler lidar system (10) is determined from a plurality of successive measurements.

7.  Method according to one of the preceding claims, **characterized in that** the laser beam is pulsed and a portion of one laser pulse is in each case used to define a timer reference point, in order to define the range of the back-scattering spatial area (52a, 52b, 52c, 52d) by means of the delay time of the remaining part of the laser pulse.

8.  Method according to one of the preceding claims, **characterized in that** a part of the laser beam is received and recorded directly and without back-scattering, with a transfer function of optical components being determined, and/or a calibration being carried out, from the intensity distribution.

9.  Method according to one of the preceding claims, **characterized in that** the density and/or the temperature of the spatial area (52a, 52b, 52c, 52d) are/is determined from the reference pattern with the least discrepancy from the measured interferogram (34).

10. Method according to one of the preceding claims, **characterized in that** the method is carried out on board a moving system, preferably on board an aircraft (50).

11. Method according to one of the preceding claims, **characterized in that** the expected intensity distribution of the reference pattern is calculated from measured atmospheric parameters and/or flight parameters of an aircraft (50).

12. Method according to one of the preceding claims, **characterized in that** the laser beam is sent in various directions in order to determine the windspeed vector in these directions by measurement of the Doppler shift.

13. Doppler lidar system (10) for detection of windspeeds, in particular on board aircraft (50) having a transmitting device (12) for transmission of a laser beam,
    a receiving device (13) for reception of the laser beam scattered-back in the atmosphere,
    an interferometer (16) for production of an interferogram (34) from the back-scattered laser beam,
    a photodetector (17) for determination of the intensity distribution of the interferogram (34), with the interferogram (34) being mapped directly onto the photodetector (17), and
    an evaluation unit (18a, 18b) for determination of the Doppler shift as a measure of the windspeed of the atmosphere, **characterized in that**
    the evaluation unit (18a, 18b) comprises a memory (18a) with a family of reference patterns which apply to previously defined atmospheric parameters which comprise different densities and/or temperatures of the atmosphere, and
    a comparison unit (18b) is provided and determines the windspeed from a comparison of the mapped interferogram (34) with the family of reference patterns.

14. Doppler lidar system according to Claim 13, **characterized in that** the photodetector (17) is a two-dimensional photodetector, which comprises an image intensifier (17a) and a CCD or CMOS array.

15. Doppler lidar system according to Claim 13 or 14, **characterized in that** a transport path (20) for a part of the laser beam is provided between the transmitting device (12) and the receiving device (13), in order to record the laser beam which is produced directly in the receiving device (13).

16. Doppler lidar system according to one of Claims 13 to 15, **characterized in that** the interferometer (16) is a Fabry-Perot interferometer, which produces an annular interference pattern.

17. Doppler lidar system according to one of Claims 13 to 16, **characterized in that** the interferometer (16) is a fizeau interferometer which produces interference patterns in the form of strips.

18. Doppler lidar system according to one of Claims 13 to 17,
    **characterized by** a laser (11) which produces pulsed laser beams in the UV band.

19. Doppler lidar system according to one of Claims 13 to 18, **characterized by** field-programmable gate arrays in order to calculate the reference patterns.

20. Doppler lidar system according to one of Claims 13 to 19, **characterized in that** the evaluation unit (18a, 18b) comprises a module for determination of the transfer function of components at the receiving end of the Doppler lidar system (10).

**Revendications**

1. Procédé pour détecter des vitesses du vent au moyen d'un système Doppler-Lidar (10), dans lequel un faisceau laser d'une longueur d'ondes prédéfinie est envoyé en direction d'une zone spatiale (52a, 52b, 52c, 52d) et la lumière rétrodiffusée à partir de la zone spatiale est réceptionnée, pour la détermination d'un déplacement du Doppler, un interférogramme (34) étant généré avec un interféromètre (16), et la distribution d'intensité de l'interférogramme (34) étant mesurée avec un photodétecteur (17),
**caractérisé en ce que**,
la distribution d'intensité est comparée à un système d'échantillons de référence, qui ont été déterminés préalablement pour des paramètres atmosphériques définis, comprenant différentes densités et/ou températures de l'atmosphère, le déplacement du Doppler étant déterminé à partir de la comparaison avec le système de différents échantillons de référence, en tant que mesure de la vitesse du vent.

2. Procédé selon la revendication 1, **caractérisé en ce que** l'interférogramme (34) est de forme annulaire et **en ce qu'**il est directement reproduit sur le photodétecteur (17) bidimensionnel.

3. Procédé selon la revendication 1, **caractérisé en ce que** l'interférogramme a la forme d'une bande et **en ce qu'**il est directement reproduit sur le photodétecteur bidimensionnel.

4. Procédé selon l'une quelconque des revendications précédentes, **caractérisé en ce que** l'échantillon de référence avec le plus faible écart par rapport à l'interférogramme (34) mesuré est utilisé pour la détermination du déplacement du Doppler.

5. Procédé selon l'une quelconque des revendications précédentes, **caractérisé en ce que** l'échantillon de référence contient en tant que paramètre la vitesse de l'atmosphère, par rapport au système Doppler-Lidar (10).

6. Procédé selon l'une quelconque des revendications précédentes, **caractérisé en ce que**, à partir de plusieurs mesures successives, la variation de la vitesse de l'atmosphère par rapport au système Doppler-Lidar 10) est déterminée.

7. Procédé selon l'une quelconque des revendications précédentes, **caractérisé en ce que** le faisceau laser est pulsé et **en ce qu'**il est utilisé chaque fois une partie d'une impulsion laser pour déterminer un point de référence temporel, pour déterminer au moyen du temps de propagation de la partie restante de l'impulsion laser la distance de la zone spatiale (52a, 52b, 52c, 52d) rétrodiffusante.

8. Procédé selon l'une quelconque des revendications précédentes, **caractérisé en ce qu'**une partie du faisceau laser est réceptionnée et enregistrée directement et sans rétrodiffusion, à partir de la distribution d'intensité, une fonction de transfert de composants optiques étant déterminée et/ou un calibrage étant réalisé.

9. Procédé selon l'une quelconque des revendications précédentes, **caractérisé en ce que**, à partir de l'échantillon de référence avec le plus faible écart par rapport à l'interférogramme (34) mesuré sont déterminées la densité et/ou la température de la zone spatiale (52a, 52b, 52c, 52d).

10. Procédé selon l'une quelconque des revendications précédentes, **caractérisé en ce qu'**il est réalisé à bord d'un système en déplacement, de préférence à bord d'un aéronef (50).

11. Procédé selon l'une quelconque des revendications précédentes, **caractérisé en ce que**, à partir des paramètres atmosphériques mesurés et/ou des paramètres de vol d'un aéronef (50), la distribution d'intensité attendue de l'échantillon de référence est calculée.

12. Procédé selon l'une quelconque des revendications précédentes, **caractérisé en ce que** le faisceau laser est envoyé dans différentes directions, pour déterminer par mesure du déplacement du Doppler dans lesdites directions le vecteur de la vitesse du vent.

13. Système Doppler-Lidar (10), pour détecter des vitesses du vent, notamment à bord d'aéronefs (50), avec un dispositif émetteur (12), pour émettre un faisceau laser, un dispositif récepteur (13), pour réceptionner le faisceau laser rétrodiffusé dans l'atmosphère,

un interféromètre (16), pour générer un interférogramme (34) à partir du faisceau laser rétrodiffusé,

un photodétecteur (17), pour déterminer la distribution d'intensité de l'interférogramme (34), l'interférogramme (34) étant directement reproduit sur le photodétecteur (17)

et une unité d'évaluation (18a, 18b) pour la détermination du déplacement du Doppler, en tant que mesure pour les vitesses du vent dans l'atmosphère,

**caractérisé en ce que**,

l'unité d'évaluation (18a, 18b) comprend une mémoire (18a) avec un système d'échantillons de référence, qui sont applicables pour des paramètres atmosphériques précédemment définis, comprenant différentes densités et/ou températures de l'atmosphère, et **en ce qu'**une unité de comparaison (18b) est prévue, qui à partir de la comparaison de l'interférogramme (34) reproduit avec le système d'échantillons de référence, détermine la vitesse du vent.

**14.** Système Doppler-Lidar selon la revendication 13, **caractérisé en ce que** le photodétecteur (17) est un photodétecteur bidimensionnel, qui comprend un amplificateur d'images (17a) et une matrice CCD ou CMOS.

**15.** Système Doppler-Lidar selon la revendication 13 ou 14, **caractérisé en ce que**, entre le dispositif émetteur (12) et le dispositif récepteur (13), il est prévu un chemin de transfert (20) pour une partie du faisceau laser, pour enregistrer le faisceau laser généré directement dans le dispositif récepteur (13).

**16.** Système Doppler-Lidar selon l'une quelconque des revendications 13 à 15, **caractérisé en ce que** l'interféromètre (16) est un interféromètre de Fabry-Perot, qui génère des échantillons d'interférences annulaires.

**17.** Système Doppler-Lidar selon l'une quelconque des revendications 13 à 16, **caractérisé en ce que** l'interféromètre (16) est un interféromètre de Fizeau, qui génère des échantillons d'interférences en forme de bandes.

**18.** Système Doppler-Lidar selon l'une quelconque des revendications 13 à 17, **caractérisé par** un laser (11), générant des faisceaux laser pulsés dans la gamme des UV.

**19.** Système Doppler-Lidar selon l'une quelconque des revendications 13 à 18, **caractérisé par** des réseaux prédiffusés programmables par champs, pour le calcul des échantillons de référence.

**20.** Système Doppler-Lidar selon l'une quelconque des revendications 13 à 19, **caractérisé en ce que** l'unité d'évaluation (18a, 18b) comprend sur le côté réception du système Doppler-Lidar (10) un module pour la détermination de la fonction de transfert de composants.

Fig. 1

Fig. 2

34

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4013702 C

**In der Beschreibung aufgeführte Nicht-Patentliteratur**

- Battery-driven Miniature LDA-System with Semiconductor Laser Diode. **S. DAMP.** Application of Laser Anemometry to Fluid Mechanics. 1989
- Tracking weathers flight path. *IEEE Spectrum,* September 2000, 38-45
- Aerosol and cloud backscatter at 1.064, 1.54, and 0.53 $\mu$m by airborne hard target calibrated Nd: YAG/methane Raman lidar. *Appl. Opt.,* 1997, vol. 36, 3475-3490
- **D. REES ; I.S. MCDERMID.** Doppler lidar atmospheric wind sensor: reevaluation of a 355-nm incoherent Doppler lidar. *Appl. Opt.,* 1990, vol. 29 (28), 4133-4144
- **C. NARDELL et al.** GroundWinds New Hampshire and the LIDARFest 2000 Campaign. *SPI Internat. Symp. on Opt. Science and Technology,* 2001
- **P.B. HAYS ; J. WANG.** Image plane detector for Fabry-Perot interferometers: physical model and improvement with anticoincidence detection. *Appl. Opt.,* 1991, vol. 30 (22), 3100-3107
- **J. WU et al.** Performance of a circle-to-line optical system for a Fabry-Perot-Interferometer: a laboratory study. *Appl. Opt.,* 1994, vol. 33, 7823-7828
- **C.L. KORB et al.** Edge technique Doppler lidar wind measurements with high vertical resolution. *Appl. Opt.,* 1997, vol. 36, 5976-5983
- **TODD D. IRGANG et al.** Two-channel direct-detection Doppler lidar employing a charge-coupled device as a detector. *Appl. Optics,* 2002, vol. 41 (6), 1145-1155